(19)

Europäisches
Patentamt
European
Patent Office
Office européen
des brevets

(11) **EP 2 033 747 A2**

(12) **EUROPEAN PATENT APPLICATION**

(43) Date of publication:
**11.03.2009 Bulletin 2009/11**

(51) Int Cl.:
***B25J 9/16*** (2006.01)

(21) Application number: **08009654.8**

(22) Date of filing: **27.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **31.05.2007 JP 2007145251**

(71) Applicant: **Fanuc Ltd**
**Yamanashi 401-0597 (JP)**

(72) Inventors:
• **Nagatsuka, Yoshiharu**
**Oshino-mura, Minamitsuru-gun**
**Yamanashi, 401-0597 (JP)**
• **Oumi, Tatsuya**
**Oshino-mura, Minamitsuru-gun**
**Yamanashi, 401-0597 (JP)**

(74) Representative: **Thum, Bernhard**
**Wuesthoff & Wuesthoff**
**Patent- und Rechtsanwälte**
**Schweigerstrasse 2**
**81541 München (DE)**

(54) **Robot simulation apparatus**

(57) A robot simulation apparatus (1) including: a display section (3) which displays models of at least a conveyance apparatus (11), an object (13), and a robot (10) respectively laid out at predetermined positions; a movement condition designating section (5) which designates a direction and a speed of movement of the object (13); an imaging condition designating section (6) which designates a relative position of the camera (12) with respect to the object (13) and imaging condition in order to obtain a still image of the object (13) located within an imaging area; a teaching model storage section (7) which stores a teaching model of the object (13) to be compared with the still image obtained with the camera; a grasping position calculating section (8) which calculates a grasping position of the object (13) to be grasped by the robot (10) based on a position and an attitude of the object (13) obtained by comparing the still image with the teaching model, and on the direction and the speed of movement of the object (13); and a teaching position setting section (9) which sets a teaching position for said robot (10) based on the grasping position.

Fig.1

**Description**

BACKGROUND OF THE INVENTION

1. Field of the Invention

The present invention relates to a robot simulation apparatus for offline simulation of the operation of a robot which tracks an object being conveyed on a conveying apparatus and grasps the object.

2. Description of Related Art

As an example of robotic production method using a robot which tracks an object being conveyed and grasps the object, a visual tracking method has been known as disclosed in Japanese Patent No. 3,002,097. A visual tracking method is a method in which a visual sensor is used to measure a position and an attitude of a moving object being conveyed on a belt conveyor as a conveying apparatus, and the object is tracked based on the measured position and attitude so as to correct a teaching position taught to a robot for grasping the object. In Japanese Patent No. 3,002,097, a technology is disclosed for causing a robot to operate in association with tracking of an object in order to accomplish a robot operation on the object being moved by a conveying apparatus such as a belt conveyor, and more particularly, for causing a robot to operate on a moving object having deviations in position.

Although not related to a visual tracking method, a method for detecting the position of a moving object is disclosed in Japanese Patent Publication No. 2004-249391, in which a method is described for using a visual sensor to detect a characteristic position and an attitude of an object being held in a robot hand and to observe a holding state of the object based on the detection result. In this Patent Reference, a holding error is obtained by comparing the holding state detected by the visual sensor with a predetermined reference holding state, and if the holding error exceeds an allowable limit, the robot operation is stopped or an alarm signal informing an anomaly of the holding state is outputted.

In conventional visual tracking method, in order to check whether or not the robot operation, the operation of a conveyor, or the detection by a visual sensor can be properly performed with no problem, it is necessary to actually operate the robot, the conveyor and the visual sensor on site and to confirm the robot operation, the operation of a conveyor and the sensor. Thus, when, for example, the interval of supplying objects, supplying speed of the supplied objects, or the shape of the objects, are to be adjusted, a special expertise and complicated work involving trial and error is required so that much time is required for such adjustment and a production system using a robot cannot be easily constructed.

SUMMARY OF THE INVENTION

It is an object of the present invention to provide a robot simulation apparatus which permits, when a conveyance method for conveying objects is to be changed, for example, when interval for supplying objects, supplying speed of objects, or shape of objects, is to be altered, time required for change of settings in the system including actual robots and cameras associated with the change of the conveyance method to be reduced, and which is thus capable of improving production efficiency of the robotic production system.

In order to attain above object, in accordance with an aspect of the present invention, there is provided a robot simulation apparatus which performs, by performing image processing of image data captured with a camera, off-line simulation of the operation of a robot which tracks an object being conveyed by a conveyance apparatus, and grasps the object at a predetermined position, comprising: a display section which displays respectively models of at least the conveyance apparatus, the object and the robot as laid out at predetermined positions; a movement condition designating section which designates a direction and speed of movement of the object; a imaging condition designating section which designates relatively a position and a imaging condition of a camera with respect to the object in order to obtain a still image of the object located in an imaging area; a teaching model storage section which stores a teaching model for the object to be compared with a still image of the object obtained by the camera; a grasping position calculating section which calculates a grasping position for the object to be grasped by the robot based on a position and an attitude of the object obtained from a comparison of the still image with a teaching model and on a direction and a speed of movement of the object; and a teaching position setting section which sets a teaching position for the robot based on a grasping position.

In accordance with the present invention, since the grasping position of the object to be grasped by the robot is obtained by the grasping position calculating section, and since the teaching position for the robot is set by the teaching position setting section, an operation of the robotic production system comprising the object, the conveyance means, the camera and the robot can be easily checked so that the time required for examining applicability of the robot can be reduced. Therefore, a teaching and a start-up of the system can be simplified and the number of process steps can be reduced, and a production efficiency of a robotic production system can be improved.

The robot simulation apparatus may further comprise an alarm generating section which generates an alarm informing an anomaly of the robot when the robot cannot grasp the object at the grasping position calculated by the grasping position calculating section. Since an alarm informing the anomaly of the robot is generated by the alarm generating section, it is possible to recognize when the robot cannot grasp the object. When an alarm is generated, the simulation is performed repeatedly after altering the method for supplying objects or the imaging condition of the camera so as to obtain a suitable method or a condition in which no alarm is generated to inform any anomaly.

The robot simulation apparatus may further comprise a shape model designating section which designates a shape model for the object. With the shape model designating section, it is possible to designate a shape model of the object having a different shape. Thus, the simulation applicable to an actual product shape can be carried out, and an applicable range of the simulation can be thereby increased.

The robot simulation apparatus can designate a plurality of shape models for a plurality of objects having different shapes, and can supply the plurality of objects having different shapes in a predetermined order to the conveyance apparatus. By supplying the plurality of objects having different shapes in a predetermined order, the conveyance of different kinds of products in actual production site can be reproduced in simulation.

The robot simulation apparatus can use a belt conveyor as the conveyance apparatus, and may further comprise a supply interval designating section which designates a supply interval for supplying a multiplicity of objects on the belt conveyor. With the supply interval designating section, it is possible to designate a supply interval for the multiplicity of objects supplied on the belt conveyor, and to reproduce the actual supplying method for supplying objects on site.

The robot simulation apparatus can use the supply interval designating section to designate a regular interval or an irregular interval for supplying a multiplicity of objects. By designating the regular interval or the irregular interval for supplying a multiplicity of objects, the actual mode of supplying objects on site can be reproduced with higher fidelity, and precision of the simulation can be improved.

The robot simulation apparatus may further comprise a destination designating section which designates a destination of movement of the grasped object, and can thereby simulate an operation of the robot for moving the object to the destination. Since the operation of moving the object grasped by the robot to the destination designated by the destination designating section can be simulated, a series of process steps including supplying an object on the belt conveyor, grasping the object by the robot and moving the object to the destination can be reproduced in simulation. Therefore, the robot simulation apparatus can be used for verifying an optimal operation and a stability in an actual robotic production system.

BRIEF DESCRIPTION OF THE DRAWINGS

The above and other objects, features and advantages of the present invention will become more apparent from following description of preferred embodiments of the invention with reference to appended drawings, in which:

Fig. 1 is a schematic view of a robot simulation apparatus according to the present invention;
Fig. 2 is a flow chart showing the flow of simulation performed by the robot simulation apparatus shown in Fig. 1;
Fig. 3A is a view showing that an object being conveyed by the belt conveyor shown in Fig. 1 is of a prism model;
Fig. 3B is a view showing that an object being conveyed by the belt conveyor shown in Fig. 1 is of a cylinder model;
Fig. 3C is a view showing that an object being conveyed by the belt conveyor shown in Fig. 1 is of a bar model;
Fig. 4 is a view for explaining the direction of movement of an object being conveyed at a predetermined speed by the same belt conveyor shown in Fig. 1;
Fig. 5 is a view for explaining the steps of conveying objects of different shape models in a predetermined order;
Fig. 6A is a view of an object being in a non-tilted attitude;
Fig. 6B is a view of an object being in a tilted attitude about an arbitrary axis;
Fig. 7A is a view of objects being conveyed at a wide interval;
Fig. 7B is a view of objects being conveyed at a narrow interval;
Fig. 8A is a view before setting imaging conditions of a camera for obtaining a still image of an object;
Fig. 8B is a view after setting imaging conditions of a camera for obtaining a still image of an object;
Fig. 9 is a view for explaining a range of the depth of field when a lens of a prescribed focal length is used;
Fig. 10 is a view for explaining a still image of an object being obtained by a camera; and
Fig. 11 is a schematic view showing relative positional relation between a robot and objects.

DETAILED DESCRIPTION

A robot simulation apparatus (hereinafter referred to simply as "simulation apparatus") according to the present invention will be described with reference to drawings. Throughout the drawings, common constituents are denoted by same reference numerals and symbols, and duplicate explanation thereof is omitted.

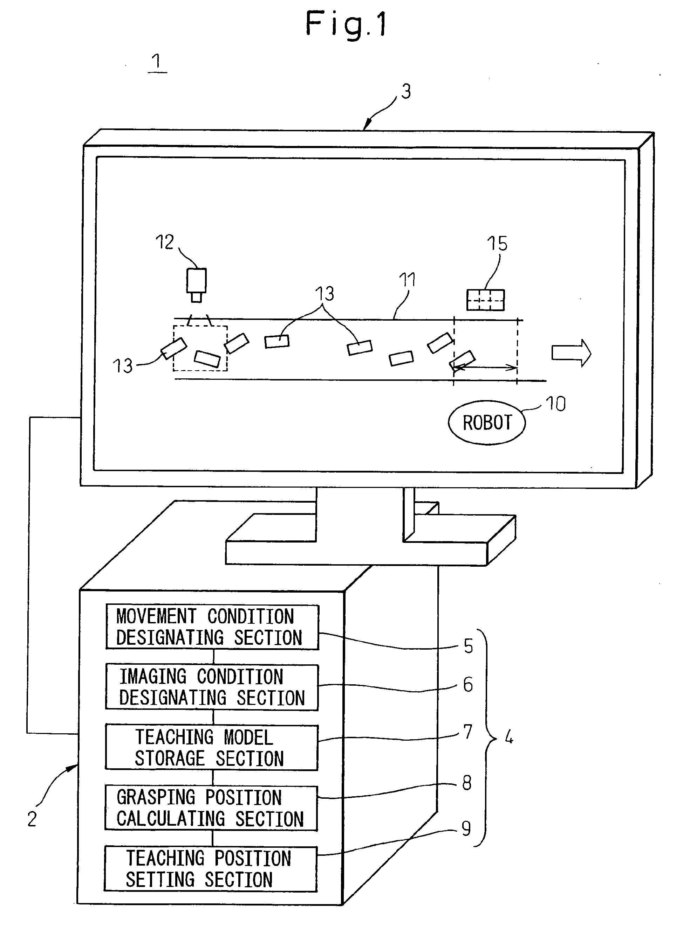

A simulation apparatus 1 according to this embodiment can simulate, by image-processing of image data captured with a camera, the tracking operation of an actual robot which tracks movement of an object being conveyed on a belt conveyor (conveyance apparatus), and the picking operation of the actual robot which grasps the object at a predetermined position, and as shown in Fig. 1, comprises an apparatus main body 2 having a control function, and a display 3 (Fig. 1) connected to the apparatus main body 2 for displaying graphic images. The display (display section) 3 uses a liquid crystal display or a CRT to display, in the form of a graphic display on a screen, model data of a robot 10 having a robotic hand. Although not shown in Fig. 1, the apparatus main body 2 has a keyboard, and a mouse as a pointing device for designating a specific position on the screen of the display 3 connected thereto.

The apparatus main body 2 has a controller 4 functioning as an essential hardware component and an unshown interface. The controller 4 has a CPU (not shown), a ROM, a RAM, and various memories (not shown) such as a flash memory. The ROM has a system program stored therein for functioning of the entire simulation apparatus 1. The RAM is a memory used for temporary storage of data used for processing performed by the CPU. The flash memory has various programs and data necessary stored therein for carrying out the simulation as described later, in addition to an operational program and data, and settings for the robot 10.

The controller 4 is electrically connected via an interface to the display 3, the keyboard, the mouse, the unshown robot controller, and a CAD device, etc., in order to transmit and receive electric signals. When the shape models have been prepared by the CAD device in advance, 3-dimensional model data of the robot 10 having a robotic hand, the belt conveyor 11, the object 13 conveyed by the conveyor 11, the camera 12, and the pallet 15 for receiving the object, are transmitted by the CAD device via a communication line. The transmitted model data are temporarily stored in the flash memory to be laid out in a predetermined positional relation on the screen of the display 3 shown in Fig. 1.

The positional relation of the individual models should reproduce the actual positional relation on the production site. Any suitable method such as a solid model, a frame model, a wire model, and the like can be employed as the display method of the individual models. Model data can be read in directly from the CAD device, or can be captured indirectly via a recording medium.

The controller 4 comprises at least following constituents. That is, the controller comprises a movement condition designating section 5 which designates a direction and speed of movement of the object 13; an imaging condition designating section 6 which designates a relative position and an imaging condition of the camera 12 with respect to the object 13 in order to obtain a still image of the object 13 located in an imaging area 14 of the camera 12; a teaching model storage section 7 which stores a teaching model for the object 13 to be compared with the still image 18 of the object 13 obtained by the camera 12; a grasping position calculating section 8 which calculates a grasping position for the object 13 to be grasped by the robot 10 based on the position and attitude of the object 13 obtained from the comparison of the still image 18 with the teaching model and on the direction and speed of movement of the object 13; and a teaching position setting section which sets a teaching position for the robot 10 based on the grasping position.

The controller 4 may further comprise an alarm generating section which generates an alarm informing an anomaly of the robot 10 when the robot 10 cannot grasp the object 13 at the grasping position calculated by the grasping position calculating section 8, a shape model designating section which designates a shape model for the object 13, a supply interval designating section which designates a supply interval for supplying a multiplicity of objects 13 on the belt conveyor 11, and a destination designating section which designates a destination position of movement of the grasped object 13.

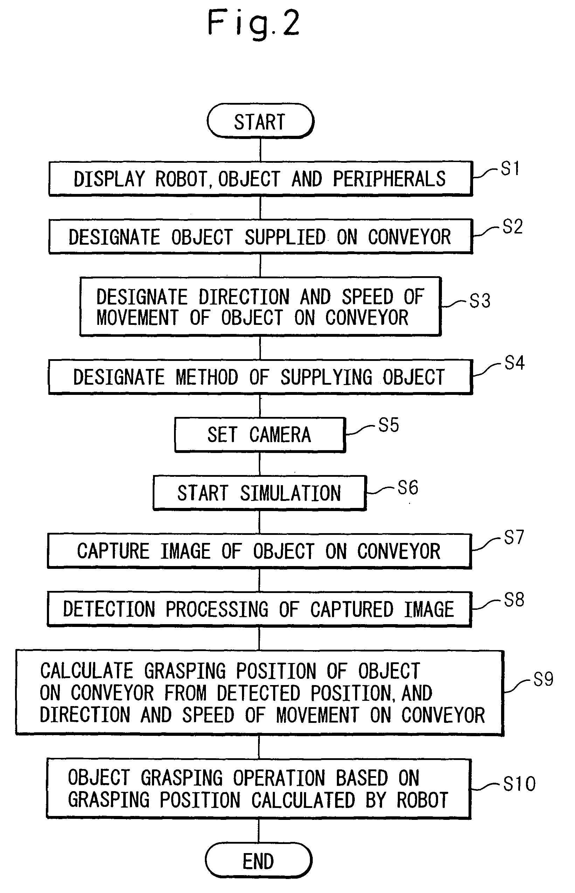

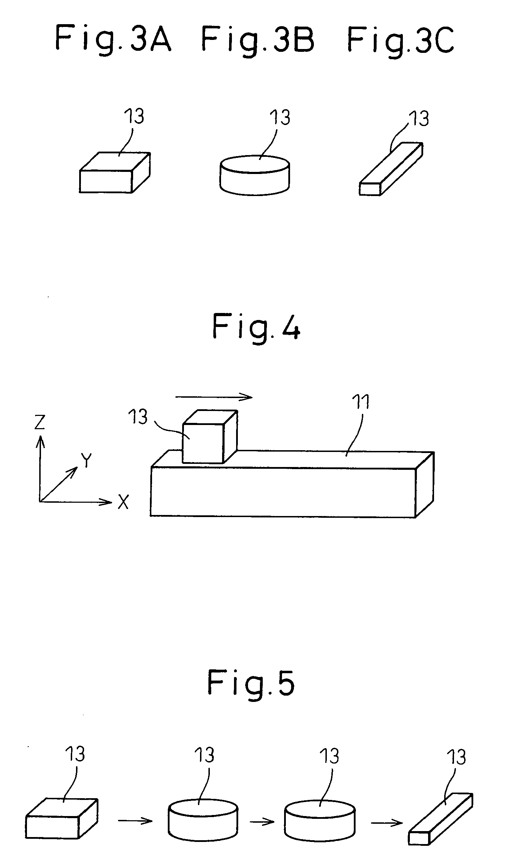

Next, the simulation conducted by using the simulation apparatus 1 of this embodiment will be described with reference to a flow chart shown in Fig. 2 and explanatory views of Figs. 3-11.

At step S1, 3-dimensional model data of the robot 10, the belt conveyor 11, the object 13, the camera 12 and the pallet 15 are displayed in a predetermined positional relation on the screen of the display 3.

At step S2, an object 13 to be supplied to the belt conveyor 11 is designated (designation of shape model). As shown in Figs. 3A-3C, various shape models reflecting actual product shapes are provided for the object 13, and any suitable shape can be selected and designated. The number of objects 13 designated is arbitrary, and plural shapes can be designated.

At step S3, a direction and a speed of movement of the object 13 conveyed by the belt conveyor are designated (designation of movement condition). In Fig. 4, an object 13 of a prism model is shown as being conveyed by the belt conveyor 11 in X direction (from left to right on the plane of the paper). The speed of movement of the object is arbitrary, and any suitable speed may be set for movement. By performing simulations with various speeds, a range of speed for which tracking operation and picking operation of the robot 10 can be carried out stably, is determined.

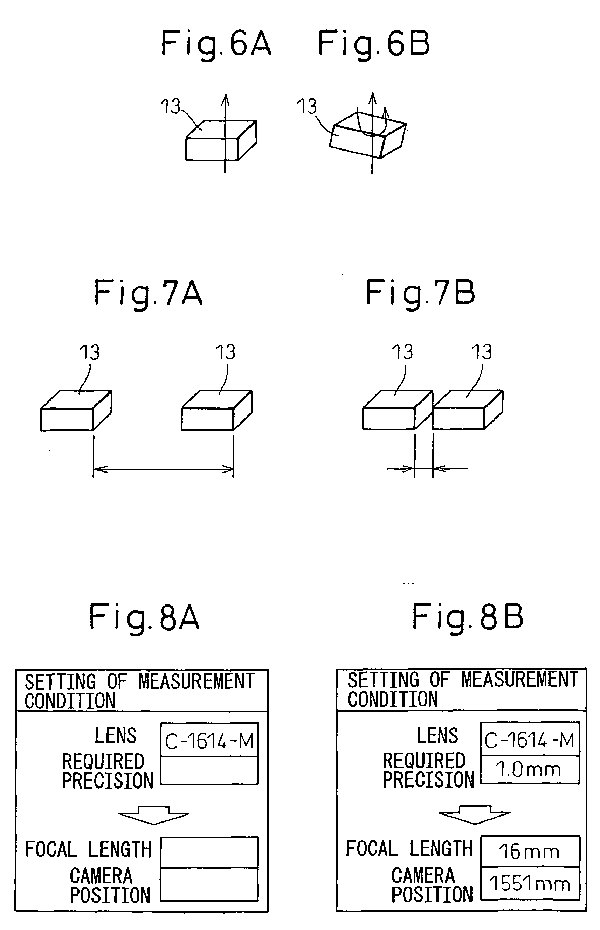

At step S4, an order of conveying a plurality of the objects 13 having different shapes as shown in Fig. 5, an attitude of the objects 13 as shown in Fig. 6A and Fig. 6B, and an interval of adjoining objects 13 as shown in Fig. 7A and Fig. 7B, are designated (designation of the method of supplying objects).

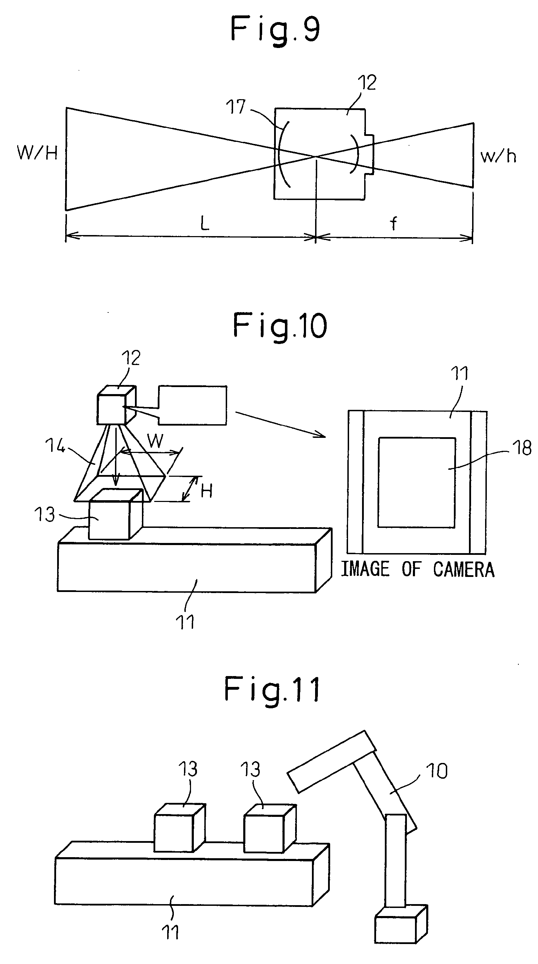

At step S5, in order to obtain still images 18 of the objects 13 located in an imaging area 14 (Fig. 10) of the camera 12, a relative position and imaging conditions of the camera 12 with respect to the objects 13 are designated (designation of imaging conditions). The camera 12 serves as a light receiver of an unshown visual sensor, and receives light reflected from the objects 13 irradiated by a slit light from an unshown light projector. The camera 12 is fixed on an upstream side of the moving object 13 on the belt conveyor 11, that is, at an arbitrary position upstream of the position of the robot 10. With such arrangement, the position of the object 13 to be grasped by the robot 10 can be determined based on the image data obtained by the camera 12.

Figs. 8A and 8B are views showing measurement conditions for the camera 12 to obtain a still image 18 of the object 13, and a lens 17, which satisfies the specified conditions, is selected such that a still image 18 permitting image processing to be performed can be obtained within the imaging area 14 of the camera 12, taking account of the positional relation between the camera 12 fixed at an arbitrary position and the object 13, the size of the object 13, the speed of movement of the object 13, etc. In Fig. 8B, a type, a resolution, and a focal length of the lens 17 are shown together with the fixed position of the camera 12 as an example. Although not shown in Fig. 8, the shutter speed of the camera 12 can also be designated in accordance with the speed of movement of the object 13.

Fig. 9 is a view showing a method of setting measurement conditions for the camera 12 so as to locate the object 13 within the imaging area 14. Referring to Fig. 9:

W is width of the object;
H is height of the object;
w is width of an image sensor (CCD or CMOS);
h is height of the image sensor;
f is focal length; and
L is distance to object.

Between these quantities, the following relation holds;

$$(w/W) = (h/H) = (f/L).$$

Thus, w, width of the image sensor, and h, height of the image sensor, are determined by the lens 17.

For example, for a lens of type 1, w = 12.7 mm, h = 9.525 mm, for a lens of type 1/2, w = 6.4 mm, h = 4.8 mm, for a lens of type 2/3, w = 8.8 mm, h = 6.6 mm, and for a lens of type 1/3, w = 4.8 mm, h = 3.6 mm. Focal length of individual lens is different for each lens, and for a lens of type 2/3, for example, f = 1.6 mm.

A resolution of an image displayed on the screen of the object 13 viewed with the camera 12 is taken as width x height = 640 mm x 480 mm. For example, if the field of view is 640 mm x 480 mm, the precision per pixel is 1 mm.

Distance to the object (position of the camera) L is (f x H)/h = 1.6 mm x 640 mm/6.6 mm = 1551.6 mm.

A position and an attitude of the camera can be determined as follows. As shown in Fig. 10, 3-dimensional position and attitude of the camera 12 is determined such that the surface perpendicular to the designated surface coincides with the line-of-sight vector of the camera 12. Thus, let the center position of the designated surface be (x, y, z) and the surface normal vector be (a1, a2, a3), then a position (X, Y, Z) of the camera 12 can be determined from the distance to the object 13 (distance of the camera) L. An attitude of the camera 12 in 3-dimensional space can be determined from the surface normal vector.

Next, at steps S6-S8, using a known method (for example, as disclosed in Japanese Patent Publication No. 2004-144557), the image data obtained with the camera 12 are compared with a teaching model stored in the teaching model storage section, and are subjected to an image-processing by an unshown image processor to detect the position and attitude of the object 13. Depending on a complexity of the shape of the object 13, when the object 13 has a 3-dimensional solid shape, the teaching model may require model data of the object 13 as viewed from plural directions. In Fig. 10, a still image 18 of the object 13 as being obtained with the camera 12 is shown. A calibration of the camera 12 may be performed using a known method (for example, as disclosed in Japanese Patent Publication No. 08-272414), based on relative positional relation between the camera 12 and a light projector, before the still image 18 is obtained with the camera 12.

At step S9, based on the position and the attitude of the object 13 obtained at steps S6-S8, and on the direction and the speed of movement of the object 13, the grasping position of the object 13 to be grasped by the robot 10 is calculated.

Finally, after the teaching position for the robot 10 has been set based on the grasping position by the teaching position setting section, at step S10, the object 13 being conveyed is grasped by the robot 10 at the grasping position obtained at step S9, as shown in Fig. 11. Then, the grasped object 13 is moved to a pallet 15, and the simulation is finished. If, in the simulation, the object 13 being conveyed cannot be tracked or picked, an alarm is displayed on the display.

As has been described above, in accordance with the robot simulation apparatus according to the present embodiment, in a robotic production system comprising objects, a belt conveyor, a camera, and a robot, the tracking operation or the picking operation of the robot upon an alteration of the method of supplying objects or change of the shape of objects can be easily checked so that time required for an examination of applicability can be reduced. A teaching and a starting-up of a system is thereby simplified, and it is possible to reduce the number of process steps and to improve the production efficiency of a robotic production system.

The present invention is by no means limited to the above-described embodiment, but can be carried out in various modifications without departing from the spirit and scope of the invention.

## Claims

1. A robot simulation apparatus (1) which performs, by an image-processing of image data captured with a camera (12), an off-line simulation of an operation of a robot (10) that tracks an object (13) being conveyed by a conveyance apparatus (11), and grasps said object (13) at a predetermined position, **characterized in that** said simulation apparatus (1) comprises:

   a display section (3) which displays models of at least said conveyance apparatus (11), said object (13), and said robot (10), respectively laid out at predetermined positions;
   a movement condition designating section (5) which designates a direction and a speed of movement of said object (13);
   an imaging condition designating section (6) which designates a relative position of said camera (12) with respect to said object (13) and imaging conditions in order to obtain a still image of said object (13) located within an imaging area;
   a teaching model storage section (7) which stores a teaching model of said object (13) to be compared with said still image obtained with said camera (12);
   a grasping position calculating section (8) which calculates a grasping position of said object (13) to be grasped by said robot (10) based on a position and an attitude of said object (13) obtained by comparing said still image with said teaching model, and on said direction and said speed of movement of said object (13); and,
   a teaching position setting section (9) which sets a teaching position for said robot (10) based on said grasping position.

2. A robot simulation apparatus (1) according to claim 1,
   **characterized in that** said simulation apparatus (1) further comprises an alarm generating section which generates an alarm informing an anomaly of said robot (10) when said robot (10) cannot grasp said object (13) at said grasping position calculated by said grasping position calculating section (8).

3. A robot simulation apparatus (1) according to claim 1 or 2,
   **characterized in that** said simulation apparatus (1) further comprises a shape model designating section which designates a shape model for said object (13).

4. A robot simulation apparatus (1) according to claim 3,
   **characterized in that** a plurality of said shape models can be designated for said object (13) having different shapes, and that a plurality of said objects (13) are supplied in a predetermined order to said conveyance apparatus (11).

5. A robot simulation apparatus (1) according to claim 1,
   **characterized in that** said simulation apparatus (1) further comprises a supply interval designating section which designates a supply interval for multiplicity of objects (13) supplied onto said belt conveyor, and that said conveyance apparatus (11) is a belt conveyor.

6. A robot simulation apparatus (1) according to claim 5,
   **characterized in that** said supply interval designated by said supply interval designating section for the plurality of said objects (13), is a regular interval or an irregular interval.

7. A robot simulation apparatus (1) according to claim 1,
   **characterized in that** said simulation apparatus (1) further comprises a destination designating section which designates a destination of movement for said grasped object (13), and that said simulation apparatus (1) simulates the operation of the robot (10) of moving said object (13) to said destination.

# Fig.1

MOVEMENT CONDITION
DESIGNATING SECTION

IMAGING CONDITION
DESIGNATING SECTION

TEACHING MODEL
STORAGE SECTION

GRASPING POSITION
CALCULATING SECTION

TEACHING POSITION
SETTING SECTION

# Fig.2

START

DISPLAY ROBOT, OBJECT AND PERIPHERALS — S1

DESIGNATE OBJECT SUPPLIED ON CONVEYOR — S2

DESIGNATE DIRECTION AND SPEED OF MOVEMENT OF OBJECT ON CONVEYOR — S3

DESIGNATE METHOD OF SUPPLYING OBJECT — S4

SET CAMERA — S5

START SIMULATION — S6

CAPTURE IMAGE OF OBJECT ON CONVEYOR — S7

DETECTION PROCESSING OF CAPTURED IMAGE — S8

CALCULATE GRASPING POSITION OF OBJECT ON CONVEYOR FROM DETECTED POSITION, AND DIRECTION AND SPEED OF MOVEMENT ON CONVEYOR — S9

OBJECT GRASPING OPERATION BASED ON GRASPING POSITION CALCULATED BY ROBOT — S10

END

## Fig.3A  Fig.3B  Fig.3C

## Fig.4

## Fig.5

Fig.6A  Fig.6B

Fig.7A  Fig.7B

Fig.8A  Fig.8B

**SETTING OF MEASUREMENT CONDITION**

| | |
|---|---|
| LENS | C-1614-M |
| REQUIRED PRECISION | |

⬇

| | |
|---|---|
| FOCAL LENGTH | |
| CAMERA POSITION | |

**SETTING OF MEASUREMENT CONDITION**

| | |
|---|---|
| LENS | C-1614-M |
| REQUIRED PRECISION | 1.0mm |

⬇

| | |
|---|---|
| FOCAL LENGTH | 16mm |
| CAMERA POSITION | 1551mm |

# Fig.9

# Fig.10

IMAGE OF CAMERA

# Fig.11

**EP 2 033 747 A2**

**REFERENCES CITED IN THE DESCRIPTION**

**Patent documents cited in the description**

- JP 3002097 B
- JP 2004249391 A
- JP 2004144557 A
- JP 8272414 A